(19) Europäisches Patentamt
European Patent Office
Office européen des brevets

(11) **EP 4 568 281 A1**

(12) **EUROPEAN PATENT APPLICATION**

(43) Date of publication:
**11.06.2025 Bulletin 2025/24**

(21) Application number: **23214404.8**

(22) Date of filing: **05.12.2023**

(51) International Patent Classification (IPC):
**H04R 3/04** *(2006.01)* **H04R 3/12** *(2006.01)*
**H04R 29/00** *(2006.01)*

(52) Cooperative Patent Classification (CPC):
**H04R 3/04; H04R 3/12;** H04R 29/002;
H04R 2420/07; H04R 2430/03; H04R 2499/11;
H04R 2499/13

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Volvo Car Corporation**
**405 31 Göteborg (SE)**

(72) Inventors:
• **Rötz, Markus**
**411 12 Göteborg (SE)**
• **Haddad, Ralph**
**411 12 Göteborg (SE)**
• **Ewald, Jonatan**
**421 35 Västra Frölunda (SE)**

(74) Representative: **Nederlandsch Octrooibureau**
**P.O. Box 29720**
**2502 LS The Hague (NL)**

(54) **ENHANCED SOUND PERFORMANCE**

(57)      A method, by a vehicle audio system, for playing audio comprising receiving data for being output through at least an internal speaker mounted inside the vehicle and at least another speaker, wherein the at least another speaker comprises one of an external speaker mounted on an outside of the vehicle and another internal speaker mounted inside the vehicle, receiving first data comprising an indication that a target listening area is outside the vehicle, processing the data based on the first data; and controlling the at least internal speaker and the at least another speaker to output the processed data, wherein the data is processed such that a frequency response of an output of the at least external speaker and/or a frequency response of an output of the at least another speaker is adjusted for audio playing outside the vehicle.

# Fig. 2

EP 4 568 281 A1

## Description

## Technical Field

The current disclosure relates to a method for playing audio. The disclosure relates further to a vehicle audio system for playing audio and to a vehicle comprising such an apparatus.

## Background Art

Portable audio devices often have a limited performance in the low frequencies due to its limited size which does not provide a good sound quality. Increasing the size of the portable audio device could provide a better performance in the low frequencies but it would make cumbersome to transport the portable audio device.

## Summary

The disclosure relates to a method, by a vehicle audio system, for playing audio, comprising receiving data for being output through a portable audio device located outside a vehicle and one or more internal speakers mounted inside the vehicle, determining a distance and/or a position of the portable audio device with respect to the vehicle, processing the data based on the determined distance and/or position of the portable audio device and controlling the one or more internal speakers to output the processed data, wherein the data is processed such that a frequency response of an output of the one or more internal speakers is adjusted based on a frequency response of the portable audio device. This allows to use for audio playing the vehicle audio system together with the portable audio device. In this way, a higher dynamic range and broader frequency range can be achieved.

The portable audio device has a wireless connection to the vehicle and can playback music both as a portable audio device itself as well as a part of the vehicle audio system inside and outside of the vehicle. The vehicle audio system can be used to complement the low-frequency range of the portable audio device with the internal speakers of the vehicle. A microphone integrated in the portable audio device can be used to determine its position around the vehicle and optimize the audio performance as desired.

Determining the position and/or distance of the portable audio device may comprise outputting a first audio signal through the one or more internal speakers, receiving a second audio signal transmitted by the portable audio device as a response to the first audio signal, and determining the location and/or distance based on the first and second audio signals.

The location and/or distance may be determined based on a difference between a first time at which the first audio signal is transmitted and a second time at which the second audio signal is received.

In order to merge the internal speakers mounted on the vehicle with the portable audio device in the outside, the distance of the portable audio device to the internal speakers of the vehicle audio system needs to be known to apply the correct filters to the audio signal to be played. As said, to determine the position of the portable audio device, the portable audio device may comprise an integrated microphone. In this way, the tuning can be adapted to the current position of the portable audio device. This allows to improve the audio performance of the portable audio device at the outside of the vehicle.

Processing the audio data further may comprise applying a time delay to the data based on the determined location and/or distance. With more advanced dedicated filter tunings, the response of the vehicle audio system is synced with the portable audio device providing a much broader frequency range, higher dynamic range and a true hi-fi experience outside of the vehicle.

The method may further comprise establishing a connection between the vehicle audio system and the portable audio device. The connection may be established via a Bluetooth, a WiFi or an access network.

The vehicle audio system may comprise one or more filters and the frequency response of the output of the one or more internal speakers may be adjusted by selecting a filter among the one or more filters and/or creating a new filter, wherein the data may be processed based on the selected and/or new filter.

The frequency response of the output of the one or more internal speakers may be adjusted by selecting a configuration for the one or more selected filter and/or new filter, and the method may further comprise configuring the selected one or more filters and/or new filter and processing the data with the configured selected and/or new filter.

An area surrounding the vehicle may be divided into a plurality of sub-areas. Determining a position and/or distance of the portable audio device may comprise determining a current sub-area wherein the portable device is located among the plurality of sub-areas, and the data may be processed based on the current sub-area. The vehicle audio system may comprise a user interface such as a screen, voice interface or any other suitable user interface allowing a user to indicate the current sub-area.

The one or more speakers may comprise a plurality of speakers located at different positions inside of the vehicle, wherein the frequency response of the output of each of the plurality of speakers may be adjusted based on the determined distance or location of the portable audio device.

The frequency response may be adjusted based on prestored data comprising a plurality of filters, wherein each of the plurality of filters may be generated by measuring, during a calibration phase, a frequency response of the output of each of the one or more speakers at different positions around the vehicle. For instance, individual transfer functions from each internal speaker to the different positions around the vehicle may be measured during the calibration phase by placing microphones at the different positions. The measured transfer functions will show the performance of each internal speaker for each different position. The transfer function of the portable audio device may be also known. Based on that, filters for each position can be created which are then stored in the audio vehicle system and applied when audio is played back. In this way, several tuning profiles are provided to optimize the music playback to different positions of the portable audio device around the vehicle.

The disclosure further relates to a vehicle audio system comprising a memory connected to a controller, wherein the controller is configured to perform the method. The vehicle audio system may comprise the one or more internal speakers. The vehicle audio system may also comprise the portable audio device, and the portable audio device may comprise a receiver arranged to receive sound.

**Brief Description of Drawings**

Figure 1A illustrates a block diagram of a vehicle audio system according to the disclosure.
Figure 1B illustrates a vehicle comprising the vehicle audio system of Figure 1A.
Figure 2 illustrates a flowchart schematically depicting a method for playing audio according to the disclosure.
Figure 3A-3D and 4A-4B illustrate an example of how to generate a new filters based on transfer functions for several speakers according to the disclosure.

**Detailed description**

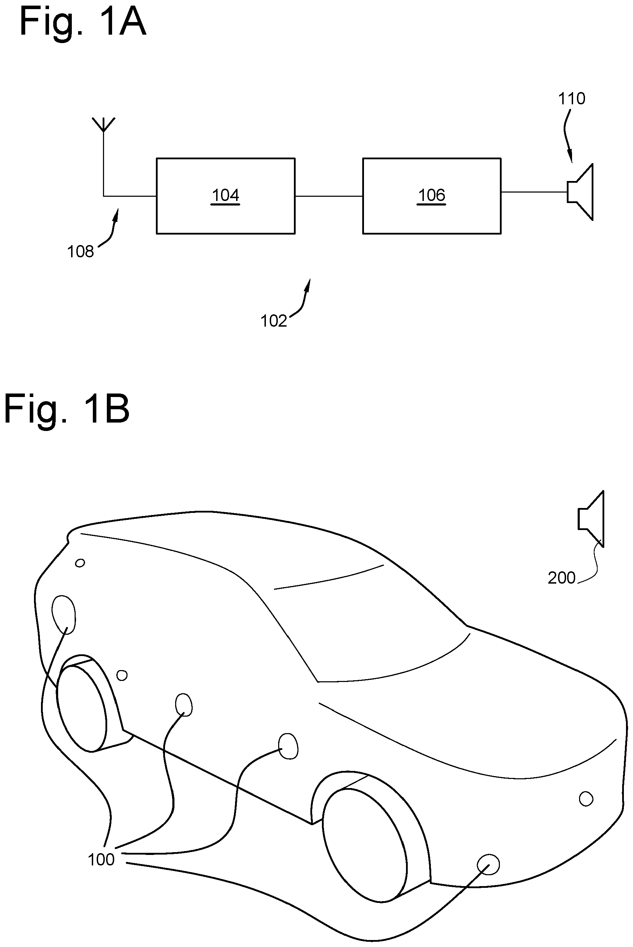

Figure 1A illustrates a block diagram of a vehicle audio system 102 according to the disclosure. The vehicle audio system 102 may comprise a head unit 104, an amplifier 106, an antenna 108, and a plurality of speakers 110. The head unit 104 or the amplifier 106 may comprise a digital signal processing unit and a memory. The vehicle audio system 102 may transmit and receive information via Bluetooth, through a wireless communication network, for example, a 4G network, and/or using any other suitable communication technology. The antenna 110 may be arranged to transmit or receive information from a portable audio device. As said, the vehicle audio system 102 may comprise a plurality of speakers. One of the plurality of speakers of the vehicle audio system may be an internal speaker mounted inside of a vehicle wherein the vehicle audio system 102 is also installed. Optionally, the plurality of speakers may comprise an external speaker mounted on the outside of the vehicle. The vehicle audio system 102 may be configured to send data to the plurality of speakers and/or to the portable audio device wherein the data may be previously processed by the processing unit 104 to be played by the plurality of speakers and by the portable audio device based on a distance or location of the portable audio device with respect to the plurality of speakers. The portable audio device may further comprise also a digital signal processing unit to further process the data to be played.

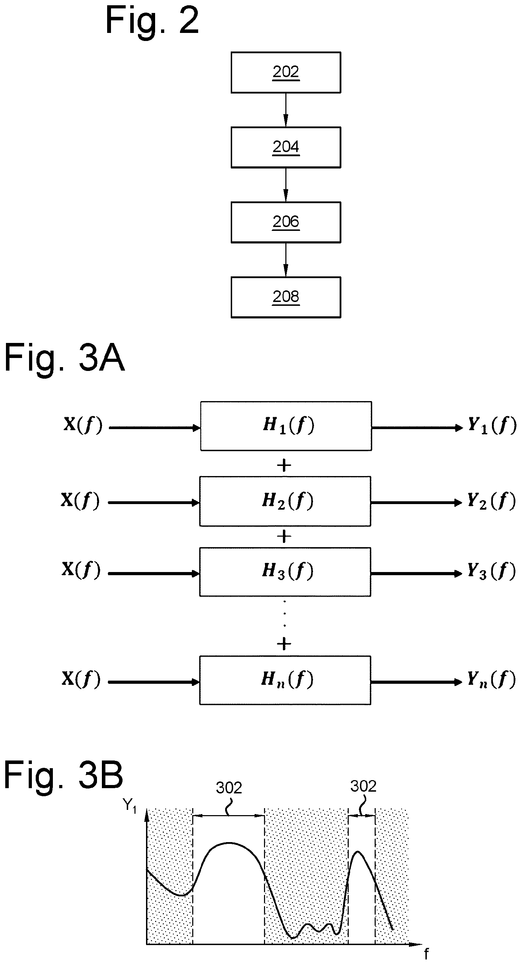

Figure 2 illustrates a flowchart schematically depicting a method for playing audio according to the disclosure. The method of Figure 2 may be performed by the vehicle audio system 102 of Figure 1A.

In step 202 of the method, the vehicle audio system 102 receives data for being output through a portable audio device located outside a vehicle and one or more internal speakers mounted inside the vehicle.

In step 204, the vehicle audio system 102 determines a distance and/or a position of the portable audio device with respect to the vehicle.

In step 206, the data is processed based on the determined distance and/or position of the portable audio device.

In step 208, the vehicle audio system 102 controls the one or more internal speakers to output the processed data. The data is processed such that a frequency response of an output of the one or more internal speakers is adjusted based on a frequency response of the portable audio device.

The data maybe any kind of data that can be output by a speaker. The vehicle audio system 102 may comprise any number of speakers. Figure 1B shows schematically a vehicle comprising a vehicle audio system according to the disclosure wherein the vehicle audio system can output audio through one or more internal speakers 100 mounted in different locations inside a cabin of the vehicle and through a portable audio device 200 outside of the vehicle at a certain location. This is a non-limiting example and the method of Figure 2 can be used with any combination of speakers located in any part of the vehicle. For instance, the speakers 100 may be mounted in any of the doors, in the trunk, in the floor beneath the front and rear seat, in the footwell area, in the cowl area (under the windshield wipers), under the dashboard, on the outside of the firewall lower A-pillar area playing into the cabin of the vehicle, etc...

The portable audio device 200 has a wireless connection to the vehicle and can playback music both as a portable audio device itself as well as a part of the vehicle audio system inside and outside of the vehicle. The speakers 100 can be used to complement the low-frequency range of the portable audio device 200.

The position and/or distance of the portable audio device 200 may be determined in step 204 by outputting a first audio signal through the internal speakers 100 that will be received by the portable device 200.

The portable device 200 will transmit a second audio signal as a response to the first audio signal which will be received by the speakers 100 and can be used to determine the location and/or distance of the portable audio device 200 in relation to the speakers 100. For instance, the location and/or distance may be determined based on a difference between a first time at which the first audio signal is transmitted and a second time at which the second audio signal is received.

Processing the data in step 206 may comprise applying a time delay to the data based on the determined location and/or distance. With more advanced dedicated filter tunings, the response of the vehicle audio system is synced with the portable audio device providing a much broader frequency range, higher dynamic range and a true hi-fi experience outside of the vehicle.

The method of Figure 2 may comprise establishing a connection between the vehicle audio system and the portable audio device wherein the connection may be established via a Bluetooth, a WiFi or an access network.

The method may comprise in step 206 selecting a filter among one or more filters of the vehicle audio system or creating a new filter, and processing the data based on the selected or new filter. The frequency response of the output of the one or more internal speakers may be adjusted by selecting a configuration for the one or more selected filter and/or new filter, and the method may further comprise in step 206 configuring the selected one or more filters and/or new filter and processing the data with the configured selected and/or new filter.

An area surrounding the vehicle may be divided into a plurality of sub-areas and step 204 may comprise determining a current sub-area wherein the portable audio device 200 is located. Then in step 206, the data may be processed based on the current sub-area. The vehicle audio system may comprise a user interface such as a screen, voice interface or any other suitable user interface allowing a user to indicate the current sub-area where the portable audio device 200 is located.

The frequency response of the output of each of the one or more speakers may be adjusted based on the determined distance or location of the portable audio device.

The frequency response of the output of each of the one or more internal speakers may also be adjusted based on prestored data comprising a plurality of filters, wherein each of the plurality of filters may be generated by measuring, during a calibration phase, a frequency response of the output of each of the one or more internal speakers at different positions around the vehicle. For instance, individual transfer functions from each internal speaker to the different positions around the vehicle may be measured during the calibration phase by placing microphones at the different positions. The measured transfer functions will show the performance of each internal speaker for each different position. The transfer function of the portable audio device may be also known.

Based on that, filters for each position can be created which are then stored in the audio vehicle system and applied when audio is played back. In this way, several tuning profiles are provided to optimize the music playback to different positions of the portable audio device around the vehicle. The filters may be stored in a memory of the vehicle audio system, in an external database that can be accessed by the vehicle audio system 102 or in any other suitable storage place.

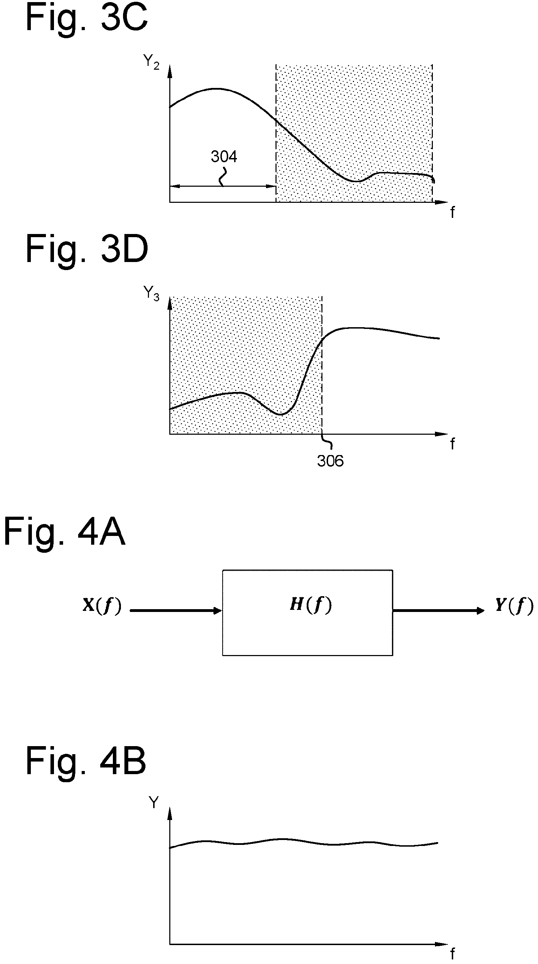

Figure 3A-3D and 4A-4B illustrate an example of how to generate filters for a different positions of the portable audio device based on transfer functions measured during a calibration phase for a number n of speakers according to the disclosure. During the calibration phase, each of the n speakers will output sound at different times and a microphone located in the different positions outside the vehicle will receive the output sound from each of the n speakers. In Figure 3A, $X(f)$ is a frequency representation of the signal to be output by each of the n speakers, $Y_k(f)$ is a frequency representation of the signal received at the microphone for the k speaker and $H_k(f)$ represents the transfer function for the k speaker wherein $H_k(f) = Y_k(f)/ X_k(f)$ and $k = 1, ..., n$. Figures 3B-3D respectively show $Y_1(f)$, $Y_2(f)$ and $Y_3(f)$. As it can be appreciated from Figures 3B-3D, each of the n speakers might have a very different frequency response. Some of the n speakers will behave better in certain frequency ranges than others of the n speakers. The transfer function $H_k(f)$ can be adjusted by selecting the best frequency range for the corresponding k speaker. The best frequency range may be selected as the frequency range which has the best transmission to the outside of the vehicle such that, for a given input voltage, maximum output may be achieved, which mau be determined by the sensitivity of the speaker installation. The best frequency range may be selected as a frequency range with higher amplitudes than other frequencies. Furthermore, the frequency ranges of several speakers may be selected in such a way that they complement each other as much as possible. For instance, in Figure 3B, the frequency ranges 302 may be selected for the first speaker. In Figure 3C, the frequency ranges 304 may be selected for the second speaker. And in Figure 3C, the frequencies above frequency 306 may be selected for the third speaker. This operation of selecting the best frequency ranges may be performed for all the n speakers to created adjusted transfer functions $H'_k(f)$ by taking only the selected parts of each transfer function. A new transfer function $H(f)$ may be created by combining all the adjusted transfer functions $H'_k(f)$. For instance, $H(f)$ may be equal to $\sum_{k=0}^{n} H'_k(f)$ and, as shown in Figures 4A and 4B, by combining the adjusted transfer functions having the best frequency response, the output $Y(f)$ resulting from the outputs of the n speakers has a broader frequency response than the outputs of the individual speakers. Filters corresponding to $H(f)$ may be created then and stored associated to the corresponding position and/or distance. This calibration operation may be performed for several positions and/or distances such that a different set of filters is stored for each of these positions and/or distances and, when one of those positions and/or distances is where the portable device audio is located, the vehicle audio system 102 will process the data using the corresponding stored set of filters.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

## Claims

1. A method, by a vehicle audio system (102), for playing audio, comprising:

   receiving (202) data for being output through a portable audio device (200) located outside a vehicle and one or more internal speakers (100) mounted inside the vehicle;
   determining (204) a distance and/or a position of the portable audio device with respect to the vehicle;
   processing (206) the data based on the determined distance and/or position of the portable audio device; and
   controlling (208) the one or more internal speakers to output the processed data;
   wherein the data is processed such that a frequency response of an output of the one or more internal speakers is adjusted based on a frequency response of the portable audio device.

2. The method according to claim 1, wherein determining (204) the position and/or distance of the portable audio device (200) comprises:

   outputting a first audio signal through the one or more internal speakers (100);
   receiving a second audio signal transmitted by the portable audio device (200) as a response to the first audio signal; and
   determining the location and/or distance based on the first and second audio signals.

3. The method according to claim 2, wherein the location and/or distance is determined based on a difference between a first time at which the first audio signal is transmitted and a second time at which the second audio signal is received.

4. The method according to any of claims 2 and 3, wherein processing (206) the audio data further comprises applying a time delay to the data based on the determined location and/or distance.

5. The method according to any of the preceding claims, further comprising establishing a connection between the vehicle audio system (102) and the portable audio device (200).

6. The method according to claim 5, wherein the connection is established via a Bluetooth, a WiFi or an access network.

7. The method according to any of the preceding claims, wherein the vehicle audio system (102) comprises one or more filters and the frequency response of the output of the one or more internal speakers (100) is adjusted by selecting a filter among the one or more filters and/or creating a new filter; and wherein the data is processed based on the selected and/or new filter.

8. The method according to claim 7, wherein the frequency response of the output of the one or more internal speakers (100) is adjusted by selecting a configuration for the one or more selected filter and/or new filter, and wherein the method further comprises configuring the selected one or more filters and/or new filter and processing the data with the configured selected and/or new filter.

9. The method according to any of the preceding claims, wherein an area surrounding the vehicle is divided into a plurality of sub-areas; wherein determining a position and/or distance of the portable audio device (200) comprises determining a current sub-area wherein the portable device (200) is located among the plurality of sub-areas; and wherein the data is processed based on the current sub-area.

10. The method according to any of the preceding claims, wherein the one or more internal speakers (100) comprise a plurality of speakers located at different positions inside of the vehicle; and wherein the frequency response of the output of each of the one or more internal speakers (100) is adjusted based on the determined distance or location of the portable audio device (200).

11. The method according to any of the preceding claims, wherein the frequency response is adjusted based on prestored data comprising a plurality of filters; and wherein each of the plurality of filters is generated by measuring, during a calibration phase, a frequency response of the output of each of the one or more internal speakers (100) at different positions around the vehicle.

12. A vehicle audio system (102) comprising a memory connected to a controller, wherein the controller is configured to perform the method of any of claims 1-11.

13. The vehicle audio system (102) according to claim 12, further comprising the one or more internal speakers (100).

14. The vehicle audio system (102) according to any of claims 12 and 13, and further comprising the portable audio device (200); wherein the portable audio device comprises a receiver arranged to receive sound.

15. A vehicle comprising the vehicle audio system (102) according to any of claims 12-14.

Fig. 1A

Fig. 1B

# Fig. 2

# Fig. 3A

# Fig. 3B

# Fig. 3C

# Fig. 3D

# Fig. 4A

# Fig. 4B

Europäisches
Patentamt
European
Patent Office
Office européen
des brevets

# EUROPEAN SEARCH REPORT

**Application Number**

EP 23 21 4404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 885 258 A (CHINA FAW GROUP CORP) 9 August 2022 (2022-08-09) | 1,5-10, 12-15 | INV. H04R3/04 |
| Y | * the whole document * | 2-4,11 | H04R3/12 |
| Y | WO 2015/123001 A1 (QUALCOMM INC [US]) 20 August 2015 (2015-08-20) * paragraphs [0014], [0018]; figure 1 * | 2-4 | ADD. H04R29/00 |
| A | EP 4 235 207 A2 (DOLBY LABORATORIES LICENSING CORP [US]; DOLBY INT AB [IE]) 30 August 2023 (2023-08-30) * paragraph [0024] – paragraph [0025] * * paragraphs [0028], [0035], [0064] * * figures 1,2 * | 2-4 | |
| Y | US 2018/063640 A1 (LEE TAE HO [KR]) 1 March 2018 (2018-03-01) * paragraph [0066] * * paragraph [0106] – paragraph [0115] * * figures 7A,7B * | 11 | |

**TECHNICAL FIELDS SEARCHED (IPC)**

H04R

The present search report has been drawn up for all claims

| Place of search | Date of completion of the search | Examiner |
|---|---|---|
| The Hague | 2 May 2024 | Streckfuss, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 4404

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | | Publication date | Patent family member(s) | | Publication date |
|---|---|---|---|---|---|
| CN 114885258 | A | 09-08-2022 | NONE | | |
| WO 2015123001 | A1 | 20-08-2015 | CN | 105981359 A | 28-09-2016 |
| | | | EP | 3105914 A1 | 21-12-2016 |
| | | | JP | 6312843 B2 | 18-04-2018 |
| | | | JP | 2017513266 A | 25-05-2017 |
| | | | KR | 20160119144 A | 12-10-2016 |
| | | | US | 2015230043 A1 | 13-08-2015 |
| | | | WO | 2015123001 A1 | 20-08-2015 |
| EP 4235207 | A2 | 30-08-2023 | CN | 109791193 A | 21-05-2019 |
| | | | CN | 117221801 A | 12-12-2023 |
| | | | EP | 3519846 A1 | 07-08-2019 |
| | | | EP | 4235207 A2 | 30-08-2023 |
| | | | US | 2019253801 A1 | 15-08-2019 |
| | | | US | 2020366994 A1 | 19-11-2020 |
| | | | WO | 2018064410 A1 | 05-04-2018 |
| US 2018063640 | A1 | 01-03-2018 | KR | 101807617 B1 | 11-12-2017 |
| | | | US | 2018063640 A1 | 01-03-2018 |

EPO FORM P0459

For more details about this annex : see Official Journal of the European Patent Office, No. 12/82